# EUROPEAN PATENT SPECIFICATION

(11) **EP 3 048 047 B1**
(45) Date of publication and mention of the grant of the patent: **13.09.2017**
(21) Application number: 16152547.2
(22) Date of filing: 25.01.2016
(51) Int. Cl.: B64D 13/06

(54) **RAM AIR FLOW MODULATION VALVE**
STAULUFTSTROMMODULATIONSVENTIL
SOUPAPE À MODULATION DE DÉBIT DE VÉRIN

(30) Priority: 23.01.2015 US 201514603608
(43) Date of publication of application: 27.07.2016
(73) Proprietor: Hamilton Sundstrand Corporation, Windsor Locks, CT 06096-1010 (US)
(72) Inventor: MCAULIFFE, Christopher, Windsor, CT Connecticut 06095 (US); ARMY, Jr., Donald E., Enfield, CT Connecticut 06082 (US)
(74) Representative: Iceton, Greg James

(56) References cited:
- EP-A2- 2 568 227
- US-A1- 2001 025 506
- US-A1- 2010 258 675

## Description

### TECHNICAL FIELD

The present invention relates generally to vehicle environmental control systems, and more particularly, to a ram air flow modulation valve that regulates temperatures in an environmental control system package.

### BACKGROUND

Environmental control systems (ECS) installed in larger commercial aircrafts typically leverage inlet and outlet doors integrated on the exterior skin of the aircraft. With respect to regional (i.e., small commercial) aircraft, however, the ram inlet and ram outlet doors are typically excluded from the outer skin to reduce the overall cost of the aircraft. Consequently, various areas of the ECS package installed in small regional aircrafts are exposed sub-freezing temperatures and can lead to ice accumulation when moisture exists. The resulting accumulation of ice can block the ram heat exchanger inlet, and/or condenser inlet. In turn, the blockages can create unintended high pressure drops within the ECS resulting in reduced ECS flow and imposing damaging loads on one or more components of the ECS.

US 2001/0025506 relates to a cooling air arrangement for a heat exchanger. US 2010/0258675 relates to a ram air-duct. EP 2568227 relates to a system for environmental protection of a heat exchanger.

### SUMMARY

According to claim 1 of the present invention, a ram air circuit for an environmental control system of an aircraft is provided.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 illustrates an ECS including a ram air flow modulation valve interposed between a heat exchanger of a ram air circuit and an outlet of the ram air circuit;
FIG. 2 illustrates the ram air circuit of FIG. 1 showing the ram air flow modulation valve interposed between the heat exchanger and the outlet;
FIG. 3A illustrates a ram air flow modulation valve including a plurality of vertical louvers in an open position according to a first non-limiting embodiment;
FIG. 3B illustrates the ram air flow modulation valve of FIG. 3A including a plurality of louvers in a closed position;
FIG. 3C illustrates the ram air flow modulation valve of FIGS. 3A-3B including a first plurality of louvers in an open position and a second plurality of louvers in a closed position;
FIG. 4 illustrates a ram air flow modulation valve including a plurality of horizontal louvers in an open position according to a second non-limiting embodiment; and
FIG. 5 illustrates a ram air modulation valve including a kinematic linkage assembly that controls a plurality of louvers according to another non-limiting embodiment.

### DETAILED DESCRIPTION OF THE INVENTION

According to various embodiments of the invention, a ram air flow modulation valve is integrated in a ram air circuit of an ECS package installed in an aircraft. In this manner, temperatures of an ECS can be regulated despite the omission of traditional ram doors on the exterior skin of the aircraft. According to an embodiment, the ram air flow modulation valve includes a plurality of louvers that can be opened and or closed based on one or more sensed temperatures of the ECS. In this manner, the position of one or more louvers can be adjusted to control temperatures within the ECS. It should be appreciated that the closed valve position may include a minimum flow area to minimize the risk of fan/air surge. Since the temperatures of the ECS can be regulated using the ram air flow modulation valve, undesirable ACM conditions associated with ice accumulation within the ECS package can be reduced and/or eliminated. For example, the ram air flow modulation valve can regulate temperatures in the ECS package such that ice blockage at the condenser inlet and/or secondary outlet is reduced.

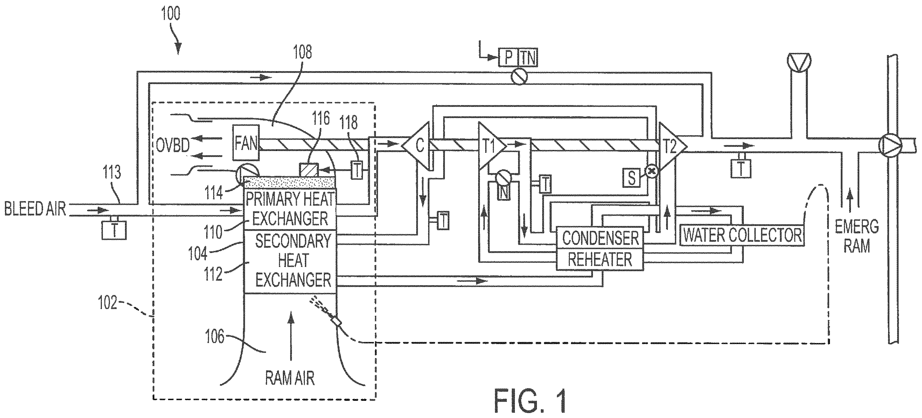

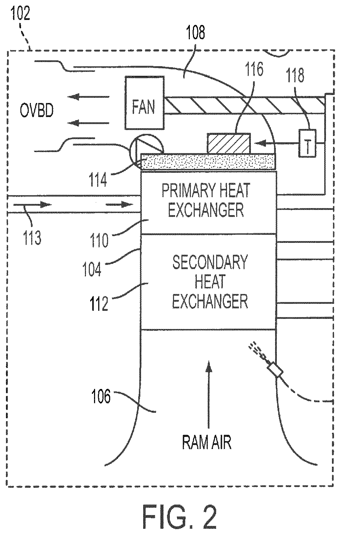

Turning now to FIGS. 1-2, an ECS 100 including a ram air circuit 102 is illustrated according to a non-limiting embodiment. The ram air circuit 102 includes a heat exchanger assembly 104 interposed between a ram inlet 106 and a ram outlet 108. According to a non-limiting embodiment, the heat exchanger assembly 104 is a dual heat exchanger assembly 104 including a primary heat exchanger 110 stacked with a secondary heat exchanger 112. It should be appreciated, however, that the invention is not limited to dual heat exchanger. The ram inlet 106 is exposed to external environment of the ECS 100 and is connected in fluid communication with the secondary heat exchanger 112. Accordingly, the ram inlet 106 is often exposed to low temperatures (e.g., freezing temperatures) of the external surrounding environment. The ram outlet 108 is disposed completely within the ECS 100 and is connected in fluid communication with the primary exchanger 110.

The ram air circuit 102 is configured to cool bleed air 113 passing through the heat exchanger 104. For example, the bleed air 113 having air temperatures reaching as high as 250 °C may be output from a compressor stage (not shown), for example. The ram inlet 106 directs cool, outside air to the heat exchanger 104. As the bleed air 113 flows through the heat exchanger 104, the temperature of the bleed air 113 is cooled via the cold outside air, before being delivered to an air cycle machine unit integrated the ECS 100 which regulates the temperature and flow of air into the cabin (not shown) to maintain a comfortable environment. In turn, cool air entering the ram inlet 106 is warmed (i.e., exchanged) as it passes through over the bleed air 113. As a result, warm air exits the ram outlet 108 where it is directed to an overboard stage (not shown).

The ram air circuit 102 further includes a ram air flow modulation valve 114 and valve control module 116. The ram air flow modulation valve 114 is interposed between the heat exchanger assembly 104 (e.g., the primary heat exchanger) and the ram outlet 108. Since the ram air flow modulation valve 114 is disposed downstream from the heat exchanger 104, the ram air flow modulation valve 114 typically realizes warmer temperatures than what is realized upstream from the heat exchanger 104 at the ram inlet 106. The ram air flow modulation valve 114 includes a plurality of louvers (not shown in FIGS. 1-2). The positions of the louvers can be adjusted to regulate the amount of air that is exhausted from the heat exchanger assembly 104 as discussed in greater detail below.

The valve control module 116 receives temperature readings from one or more temperature sensors 118 disposed in the ECS 100 and/or outer skin of the aircraft, and controls the ram air flow modulation valve 114 to regulate the temperature within the ECS 100. Accordingly, the valve control module 116, temperature sensors 118, and ram air flow modulation valve 114 can form a temperature control system that controls one or more locations of the ECS 100. Although the valve control module 116 is shown to be installed on the ram air flow modulation valve 114, it should be appreciated that the valve control module 116 can be disposed separately and/or remotely from the ram air flow modulation valve 114. The valve control module may include a microprocessor and memory that stores one or more temperature threshold values corresponding to a location of one or more respective temperature sensors 118. In this manner, the valve control module 116 can compare the monitored temperature value from one or more sensors 118 to a respective temperature threshold value and controls the ram air flow modulation valve 114 to obtain a desired temperature at the location of the respective sensors 118. In addition, the valve control module 116 may control the ram air flow modulation valve 114 according to one or more schedules stored in memory. For example, the valve control module 116 may adjust the ram air flow modulation valve 114 into a first position during taxing of the aircraft, while adjusting the ram air flow modulation valve 114 into a second condition that throttles airflow through the ram air circuit 102 during flight.

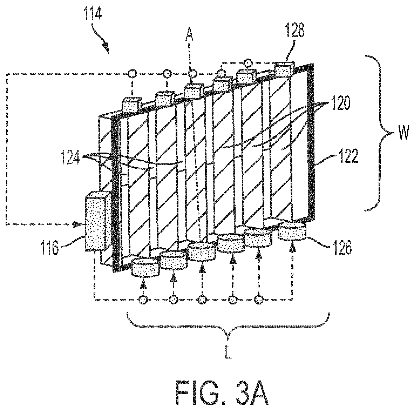

Turning now to FIGS. 3A-3C, a ram air flow modulation valve 114 is illustrated according to a non-limiting embodiment. The ram air flow modulation valve 114 includes one or more louvers 120 configured to move between a first position (e.g., an open position) and a second position (e.g., a closed position). According to an embodiment, the ram air flow modulation valve 114 includes a housing 122 extending along a first direction to define a length (L) and a second direction opposite the first direction to define a width (W).

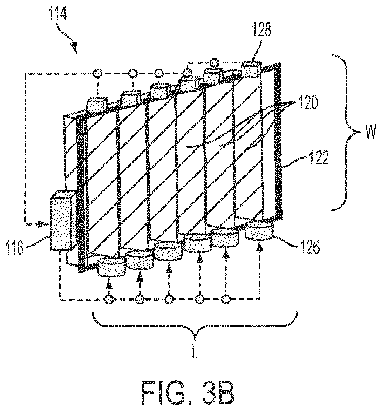

A plurality of louvers 120 are disposed sequentially along the length of the housing 122. Each louver 120 includes a first end movably coupled to a first length-side of the housing 122 and a second end movably coupled to a second length-side of the housing 122 located opposite the first length-side. In this manner, each louver 120 is configured to rotate about an axis (A) extending along the width of the housing 122. When fully adjusted into a first position (i.e., fully opened), the louvers 120 define a plurality of air passage 124 therebetween which extend along the width of the housing 122 (see FIG. 3A). When fully adjusted into a second position (i.e., minimum flow area), however, the air passages 124 are minimized (see FIG. 3B). Accordingly, air flowing through the ram air flow modulation valve 114 can be regulated as discussed in greater detail below.

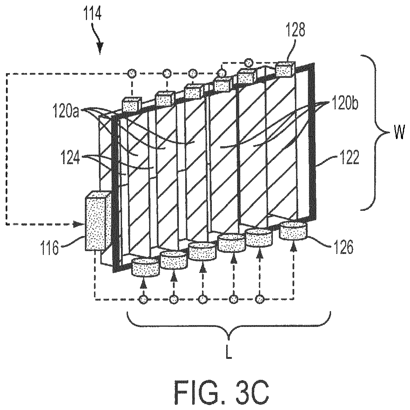

According to an embodiment, one or more first louvers 120a can be adjusted with respect to one or more second louvers 120b. As shown in FIG. 3C, for example, a first set of louvers 120a can be adjusted into a first position (i.e., open position), while a second set of louvers 120b can be adjusted into a different second position (i.e., closed position). Accordingly, the amount of air allowed to flow through the ram air circuit (not shown in FIGS. 3A-3C) can be more precisely controlled. Further, individual louvers 120 can be independently adjusted according to a respective temperature schedule stored in the valve control module 116.

The ram air flow modulation valve 114 further includes one or more actuators 126 and one or more louver position sensors 128. Each of the actuators 126 and each of the louver position sensors 128 are in electrical communication with the valve control module 116. Each actuator 126 is configured to adjust a rotational position of a respective louver 120. Each louver position sensor 128 is configured to determine a rotational position of a respective louver 120 and output an electrical signal indicating the rotational position. In this manner, the valve control module 116 can output a control signal that controls one or more of the actuators 126, and in turn adjusts a position of one or more of respective louvers 120 about the axis (A) such that size of the air passages 124 can be adjusted and air flowing through the ram air flow modulation valve can be regulated. For example, the valve control module 116 can determine a temperature at one or more locations within the ECS and/or at the exterior skin of the aircraft based on the output of a respective temperature sensor (not shown in FIGS. 3A-3C), and output one or more control signals the control a respective actuator 126, which in turns adjusts a position of one or more louvers 120. The position of the louvers 120 regulates the air flow through the air passages 124, and through the ram air circuit. Accordingly, a temperature at a location within the ECS (not shown in FIGS. 3A-3C) can be maintained at a desired temperature. Although the louver sensors 128 are illustrated as being integrated with a respective louver 128, it should be appreciated that one or more positions sensors 128 may be part of the actuator assembly in lieu of being a separately mounted sensor.

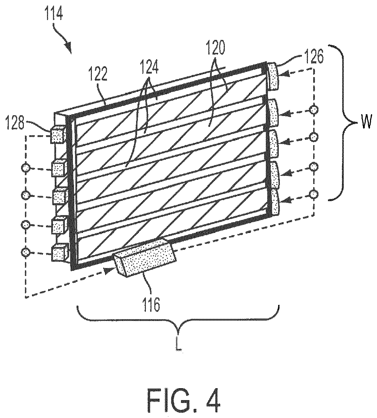

Turning to FIG. 4, a ram air flow modulation valve 114 is illustrated according to another non-limiting embodiment. The ram air flow modulation valve 114 operates in a similar manner as described in detail above. The ram air flow modulation valve 114 of FIG. 4, however, includes a plurality of louvers 120 that are disposed sequentially along the width of the housing 122 (e.g., vertically). Each louver 120 includes a first end movably coupled to a first width-side of the housing 122 and a second end movably coupled to a second width-side of the housing 122 located opposite the first width-side. In this manner, each louver 120 is configured to rotate about an axis (A) that extends along the length of the housing 122. When fully adjusted into a first position (i.e., fully opened), the louvers 120 define a plurality of air passage 124 therebetween which extend along the length of the housing 122. Temperature gradients typically vary along a vertical axis. With this in mind, one or more louvers 120 can be adjusted to reduce the thermal gradient within the heat exchanger (not shown in FIG. 4), thereby improving thermal fatigue life of the heat exchanger.

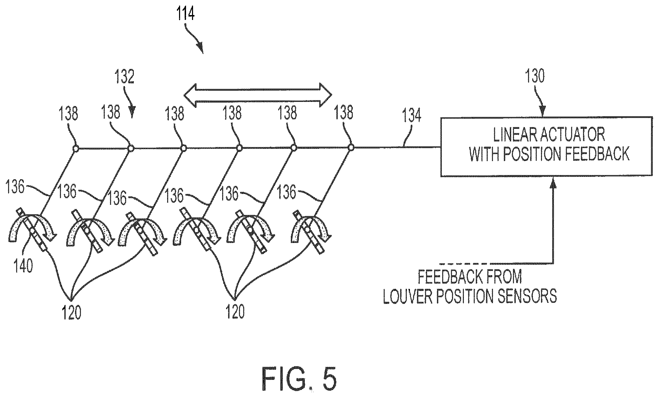

Turning now to FIG. 5, the ram air modulation valve 114 is illustrated according to another embodiment. The ram air modulation valve 114 includes louvers 120 that are connected to a linear actuator 130 via a kinematic linkage assembly 132. The kinematic linkage assembly 132 includes a main shaft 134 and one or more auxiliary shafts 136 connected to the main shaft 134 at a respective pivot 138. The linear actuator 130 drives the main shaft 134, which in turn drives the auxiliary shafts 136 about the pivots 138 as understood by one of ordinary skill in the art. The louvers 120 are coupled to a respective auxiliary shaft 136 via a louver pivot 140. In this manner, adjusting an auxiliary shaft in turn adjusts a position of a respective louver 120 between an open position and a closed position. In addition, the linear actuator 130 receives positional feedback data from one or more louver position sensors (not shown in FIG. 5). Accordingly, the linear actuator 130 can dynamically adjust the position of the louvers 120 as described in detail above.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A ram circuit (102) for an environmental control system of an aircraft, the ram air circuit comprising:
a ram inlet (106) able to be in fluid communication with an external area of the aircraft, and a ram outlet (108) able to be in fluid communication with an internal area of the environmental control system disposed within the aircraft;
a heat exchanger assembly (104) interposed in fluid communication between the ram inlet (106) and the ram outlet (108);
and a ram air flow modulation valve (114) **characterised in that** the ram air flow modulation valve (114) is disposed directly against an outlet of the heat exchanger assembly (104) such that the ram air flow modulation valve (114) is disposed upstream from the ram outlet (108), the ram air flow modulation valve (114) configured to operate in a plurality of positions to regulate airflow delivered to the ram outlet (108),
wherein the ram air flow modulation valve (114) comprises:
a plurality of louvers (120) movable between a first position that allows airflow to pass and a second position that inhibits airflow;
an actuator (126) connected to a respective louver (120) among the plurality of louvers (120), each actuator (126) configured to move the respective louver (120) between the first position and the second position in response to at least one electrical signal; and
a louver position sensor (128) in signal communication with a respective louver (120 among the plurality of louvers (120), each louver position sensor (128) configured to determine a position of the respective louver (120) and output a position signal indicating the position,
wherein at least one first louver (120) among the plurality of louvers is independently adjustable with respect to at least one remaining louver among the plurality of louvers.

2. The ram air circuit (102) of claim 1, wherein the ram air flow modulation valve (114) further includes a housing (122) extending along a first direction to define a length and a second direction opposite the first direction to define a width.

3. The ram air circuit (102) of claim 2, wherein the plurality of louvers is disposed sequentially along the length of the housing, each louver including a first end movably coupled to a first length-side of the housing and a second end movably coupled to a second length-side of the housing located opposite the first length-side such that each louver is configured to rotate about an axis (A) extending along the width of the housing.

4. The ram air circuit (102) of claim 2, wherein the plurality of louvers is disposed sequentially along the width of the housing, each louver including a first end movably coupled to a first width-side of the housing and a second end movably coupled to a second width-side of the housing located opposite the first width-side such that each louver is configured to rotate about an axis (A) extending along the length of the housing.

5. An aircraft temperature control system for controlling a temperature of an environmental control system of an aircraft, comprising:
the ram circuit (102) of claim 1; and
an electronic valve control module (116) in electrical communication with the ram air flow modulation valve and at least one temperature sensor (118) disposed remotely from the heat exchanger assembly (104) included in the ram circuit (102), the electronic valve control module configured to output at least one electrical signal that adjusts a position of the ram air flow modulation valve based on a temperature value output from the at least one temperature sensor (118).

6. The aircraft temperature control system of claim 5, wherein the ram air flow modulation valve (114) is interposed between the heat exchanger assembly (104) and the ram outlet (108).

7. The aircraft temperature control system of claim 5, wherein the ram air flow modulation valve (114) further includes a housing (122) extending along a first direction to define a length and a second direction opposite the first direction to define a width; and
wherein the plurality of louvers is disposed sequentially along the length of the housing, each louver including a first end movably coupled to a first length-side of the housing and a second end movably coupled to a second length-side of the housing located opposite the first length-side such that each louver is configured to rotate about an axis (A) extending along the width of the housing.

8. The aircraft temperature control system of claim 7, wherein at least one first louver (120) among the plurality of louvers is independently adjustable with respect to at least one remaining louver among the plurality of louvers.

9. The aircraft temperature control system of claim 5, wherein the ram air flow modulation valve (114) further includes a housing (122) extending along a first direction to define a length and a second direction opposite the first direction to define a width; and
wherein the plurality of louvers is disposed sequentially along the width of the housing, each louver including a first end movably coupled to a first width-side of the housing and a second end movably coupled to a second width-side of the housing located opposite the first width-side such that each louver is configured to rotate about an axis (A) extending along the length of the housing.

10. The aircraft temperature control system of claim 9, wherein at least one first louver (120a) among the plurality of louvers is independently adjustable with respect to at least one remaining louver among the plurality of louvers.

## Patentansprüche

1. Stauluftkreislauf (102) für ein Umgebungskontrollsystem eines Flugzeugs, wobei der Stauluftkreislauf Folgendes umfasst:
einen Staulufteinlass (106), der mit einem Außenbereich des Flugzeugs in Fluidverbindung stehen kann, und einen
Stauluftauslass (108), der mit einem Innenbereich des Umgebungskontrollsystems, das innerhalb des Flugzeugs angeordnet ist, in Fluidverbindung stehen kann;
eine Wärmetauscheranordnung (104), die in Fluidverbindung zwischen dem Staulufteinlass (106) und dem Stauluftauslass (108) zwischengeschaltet ist;
und ein Stauluftstrommodulationsventil (114), **dadurch gekennzeichnet, dass** das Stauluftstrommodulationsventil (114) direkt gegen einen Auslass der Wärmetauscheranordnung (104) angeordnet ist, so dass das Stauluftstrommodulationsventil (114) vor dem Stauluftauslass (108) angeordnet ist, wobei das Stauluftstrommodulationsventil (114) so konfiguriert ist, dass es in einer Vielzahl von Positionen betrieben werden kann, um den Luftstrom, der zum Stauluftauslass (108) geliefert wird, zu regulieren,
wobei das Stauluftstrommodulationsventil (114) Folgendes umfasst:
eine Vielzahl von Klappen (120), die zwischen einer ersten Position, die den Durchgang des Luftstroms ermöglicht, und einer zweiten Position, die den Luftstrom hemmt, beweglich sind;
ein Stellglied (126), das mit einer jeweiligen Klappe (120) unter der Vielzahl von Klappen (120) verbunden ist, wobei jedes Stellglied (126) so konfiguriert ist, dass es die jeweilige Klappe (120) zwischen der ersten Position und der zweiten Position in Reaktion auf mindestens ein elektrisches Signal bewegen kann; und
einen Klappenpositionssensor (128) in Signalverbindung mit einer jeweiligen Klappe (120) unter der Vielzahl von Klappen (120), wobei jeder Klappenpositionssensor (128) so konfiguriert ist, dass er eine Position der jeweiligen Klappe (120) ermitteln kann und ein Positionssignal ausgeben kann, das die Position angibt, wobei mindestens eine erste Klappe (120) unter der Vielzahl von Klappen unabhängig in Bezug auf mindestens eine verbleibende Klappe unter der Vielzahl von Klappen einstellbar ist.

2. Stauluftkreislauf (102) nach Anspruch 1, wobei das Stauluftstrommodulationsventil (114) weiter ein Gehäuse (122) umfasst, das sich entlang einer ersten Richtung zur Abgrenzung einer Länge und entlang einer zweiten Richtung gegenüber der ersten Richtung zur Abgrenzung einer Breite erstreckt.

3. Stauluftkreislauf (102) nach Anspruch 2, wobei die Vielzahl von Klappen aufeinanderfolgend entlang der Länge des Gehäuses angeordnet ist, wobei jede Klappe ein erstes Ende umfasst, das beweglich an eine erste Längsseite des Gehäuses gekoppelt ist, und ein zweites Ende, das beweglich an eine zweite Längsseite des Gehäuses, die sich gegenüber der ersten Längsseite befindet, gekoppelt ist, so dass jede Klappe so konfiguriert ist, dass sie um eine Achse (A), die sich entlang der Breite des Gehäuses erstreckt, rotieren kann.

4. Stauluftkreislauf (102) nach Anspruch 2, wobei die Vielzahl der Klappen aufeinanderfolgend entlang der Breite des Gehäuses angeordnet ist, wobei jede Klappe ein erstes Ende umfasst, das beweglich an eine erste Breitseite des Gehäuses gekoppelt ist, und ein zweites Ende, das beweglich an eine zweite Breitseite des Gehäuses, die sich gegenüber der ersten Breitseite befindet, gekoppelt ist, so dass jede Klappe so konfiguriert ist, dass sie um eine Achse (A), die sich entlang der Länge des Gehäuses erstreckt, rotieren kann.

5. Flugzeugtemperatursteuerungssystem zum Steuern einer Temperatur eines Umgebungskontrollsystems eines Flugzeugs, umfassend:
den Stauluftkreislauf (102) nach Anspruch 1; und
ein elektronisches Ventilsteuermodul (116) in elektrischer Verbindung mit dem Stauluftstrommodulationsventil und mindestens einem Temperatursensor (118), von der Wärmetauscheranordnung (104), die im Stauluftkreislauf (102) enthalten ist, entfernt angeordnet, wobei das elektronische Ventilsteuermodul so konfiguriert ist, dass es mindestens ein elektrisches Signal ausgibt, das die Position des Stauluftstrommodulationsventils auf der Basis einer Temperaturwertausgabe von dem mindestens einen Temperatursensor (118) einstellt.

6. Flugzeugtemperatursteuerungssystem nach Anspruch 5, wobei das Stauluftstrommodulationsventil (114) zwischen der Wärmetauscheranordnung (104) und dem Stauluftauslass (108) zwischengeschaltet ist.

7. Flugzeugtemperatursteuerungssystem nach Anspruch 5, wobei das Stauluftstrommodulationsventil (114) weiter ein Gehäuse (122) umfasst, das sich entlang einer ersten Richtung zur Abgrenzung einer Länge und entlang einer zweiten Richtung gegenüber der ersten Richtung zur Abgrenzung einer Breite erstreckt; und
wobei die Vielzahl von Klappen aufeinanderfolgend entlang der Länge des Gehäuses angeordnet ist, wobei jede Klappe ein erstes Ende umfasst, das beweglich an eine erste Längsseite des Gehäuses gekoppelt ist, und ein zweites Ende, das beweglich an eine zweite Längsseite des Gehäuses, die sich gegenüber der ersten Längsseite befindet, gekoppelt ist, so dass jede Klappe so konfiguriert ist, dass sie um eine Achse (A), die sich entlang der Breite des Gehäuses erstreckt, rotieren kann.

8. Flugzeugtemperatursteuerungssystem nach Anspruch 7, wobei mindestens eine erste Klappe (120) unter der Vielzahl von Klappen unabhängig in Bezug auf mindestens eine verbleibende Klappe unter der Vielzahl von Klappen einstellbar ist.

9. Flugzeugtemperatursteuerungssystem nach Anspruch 5, wobei das Stauluftstrommodulationsventil (114) weiter ein Gehäuse (122) umfasst, das sich entlang einer ersten Richtung zur Abgrenzung einer Länge und entlang einer zweiten Richtung gegenüber der ersten Richtung zur Abgrenzung einer Breite erstreckt; und
wobei die Vielzahl der Klappen aufeinanderfolgend entlang der Breite des Gehäuses angeordnet ist, wobei jede Klappe ein erstes Ende umfasst, das beweglich an eine erste Breitseite des Gehäuses gekoppelt ist, und ein zweites Ende, das beweglich an eine zweite Breitseite des Gehäuses, die sich gegenüber der ersten Breitseite befindet, gekoppelt ist, so dass jede Klappe so konfiguriert ist, dass sie um eine Achse (A), die sich entlang der Länge des Gehäuses erstreckt, rotieren kann.

10. Flugzeugtemperatursteuerungssystem nach Anspruch 9, wobei mindestens eine erste Klappe (120a) unter der Vielzahl von Klappen unabhängig in Bezug auf mindestens eine verbleibende Klappe unter der Vielzahl von Klappen einstellbar ist.

## Revendications

1. Circuit de vérin (102) pour un système de contrôle environnemental d'un avion, le circuit de vérin comprenant :
une entrée de vérin (106) pouvant être en communication fluidique avec une zone extérieure de l'avion, et une sortie de vérin (108) pouvant être en communication fluidique avec une zone intérieure du système de contrôle environnemental disposé dans l'avion ;
un ensemble d'échangeur de chaleur (104) interposé en communication fluidique entre l'entrée de vérin (106) et la sortie de vérin (108) ;
et une soupape à modulation de débit de vérin (114) **caractérisée en ce que** la soupape à modulation de débit de vérin (114) est disposée directement contre une sortie de l'ensemble d'échangeur de chaleur (104) de sorte que la soupape à modulation de débit de vérin (114) est disposée en amont de la sortie de vérin (108), la soupape à modulation de débit de vérin (114) étant configurée pour fonctionner dans une pluralité de positions pour réguler le débit d'air délivré à la sortie de vérin (108),
dans lequel la soupape à modulation de débit de vérin (114) comprend :
une pluralité de volets (120) mobile entre une première position qui permet au débit d'air de passer et une deuxième position qui inhibe le débit d'air ;
un actionneur (126) connecté à un volet respectif (120) parmi la pluralité de volets (120), chaque actionneur (126) étant configuré pour déplacer le volet respectif (120) entre la première position et la deuxième position en réponse à au moins un signal électrique ; et
un détecteur de position de volet (128) en communication par signaux avec un volet respectif (120) parmi la pluralité de volets (120), chaque détecteur de position de volet (128) étant configuré pour déterminer une position du volet respectif (120) et émettre un signal de position indiquant la position,
dans lequel au moins un premier volet (120) parmi la pluralité de volet est réglable indépendamment par rapport à au moins un volet restant parmi la pluralité de volets.

2. Circuit de vérin (102) selon la revendication 1, dans lequel la soupape à modulation de débit de vérin (114) comprend en outre un logement (122) s'étendant le long d'une première direction pour définir une longueur et une deuxième direction opposée à la première direction pour définir une largeur.

3. Circuit de vérin (102) selon la revendication 2, dans lequel la pluralité de volets est disposée successivement le long de la longueur du logement, chaque volet comprenant une première extrémité couplée de manière mobile à un premier côté de longueur du logement et une deuxième extrémité couplée de manière mobile à un deuxième côté de longueur du logement situé face au premier côté de longueur de sorte que chaque volet est configuré pour tourner autour d'un axe (A) s'étendant le long de la largeur du logement.

4. Circuit de vérin (102) selon la revendication 2, dans lequel la pluralité de volets est disposée successivement le long de la largeur du logement, chaque volet comprenant une première extrémité couplée de manière mobile à un premier côté de largeur du logement et une deuxième extrémité couplée de manière mobile à un deuxième côté de largeur du logement situé face au premier côté de largeur de sorte que chaque volet est configuré pour tourner autour d'un axe (A) s'étendant le long de la longueur du logement.

5. Système de contrôle de la température d'un avion pour contrôler une température d'un système de contrôle environnemental d'un avion, comprenant :
le circuit de vérin (102) selon la revendication 1 ; et
un module de contrôle de soupape électronique (116) en communication électrique avec la soupape à modulation de débit de vérin et au moins un capteur de température (118) disposé à distance de l'ensemble d'échangeur de chaleur (104) inclus dans le circuit de vérin (102), le module de contrôle de soupape électronique étant configuré pour émettre au moins un signal électrique pour ajuster une position de la soupape à modulation de débit de vérin sur la base d'une valeur de température émise par l'au moins un capteur de température (118) .

6. Système de contrôle de la température d'un avion selon la revendication 5, dans lequel la soupape à modulation de débit de vérin (114) est interposée entre l'ensemble d'échangeur de chaleur (104) et la sortie de vérin (108).

7. Système de contrôle de la température d'un avion selon la revendication 5, dans lequel la soupape à modulation de débit de vérin (114) comprend en outre un logement (122) s'étendant le long d'une première direction pour définir une longueur et une deuxième direction opposée à la première direction pour définir une largeur ; et
dans lequel la pluralité de volets est disposée successivement le long de la longueur du logement, chaque volet comprenant une première extrémité couplée de manière mobile à un premier côté de longueur du logement et une deuxième extrémité couplée de manière mobile à un deuxième côté de longueur du logement situé face au premier côté de longueur de sorte que chaque volet est configuré pour tourner autour d'un axe (A) s'étendant le long de la largeur du logement.

8. Système de contrôle de la température d'un avion selon la revendication 7, dans lequel au moins un premier volet (120) parmi la pluralité de volets est réglable indépendamment par rapport à au moins un volet restant parmi la pluralité de volets.

9. Système de contrôle de la température d'un avion selon la revendication 5, dans lequel la soupape à modulation de débit de vérin (114) comprend en outre un logement (122) s'étendant dans une première direction pour définir une longueur et une deuxième position opposée à la première direction pour définir une largeur ; et
dans lequel la pluralité de volets est disposée successivement le long de la largeur du logement, chaque volet comprenant une première extrémité couplée de manière mobile à un premier côté de largeur du logement et une deuxième extrémité couplée de manière mobile à un deuxième côté de largeur du logement situé face au premier côté de largeur de sorte que chaque volet est configuré pour tourner autour d'un axe (A) s'étendant le long de la longueur du logement.

10. Système de contrôle de la température d'un avion selon la revendication 9, dans lequel au moins un premier volet (120a) parmi la pluralité de volets est réglable indépendamment par rapport à au moins un volet restant parmi la pluralité de volets.
